# EUROPÄISCHE PATENTSCHRIFT

(11) **EP 2 069 056 B1**
(45) Veröffentlichungstag und Bekanntmachung des Hinweises auf die Patenterteilung: **10.04.2013**
(21) Anmeldenummer: 07818099.9
(22) Anmeldetag: 11.09.2007
(51) Int. Cl.: B01D 71/62, B01D 71/82, H01M 8/10, C08G 73/18, C08J 5/22

(54) **VERFAHREN ZUR HERSTELLUNG EINER PROTONENLEITENDEN, POLYAZOL-ENTHALTENDEN MEMBRAN**
PROCESS FOR PRODUCING A PROTON-CONDUCTING, POLYAZOLE-CONTAINING MEMBRANE
PROCÉDÉ DE FABRICATION D'UNE MEMBRANE CONTENANT DU POLYAZOLE, CONDUCTRICE DE PROTONS

(30) Priorität: 12.09.2006 DE 102006042760
(43) Veröffentlichungstag der Anmeldung: 17.06.2009
(73) Patentinhaber: BASF Fuel Cell Research GmbH, 67056 Ludwigshafen (DE)
(72) Erfinder: UENSAL, Oemer, 55128 Mainz (DE); WEBER, Mathias, 65428 Rüsselsheim (DE); CHRIST, Gunter, 65510 Hünstetten (DE); DÖRR, Christian, 65817 Eppstein (DE); WALCZYK, Daniel, Troy NY 12180-3590 (US); HARRIS, Tequila, Troy NY 12180-3590 (US)
(74) Vertreter: Mai, Dörr, Besier
(86) Internationale Anmeldenummer: PCT/EP2007/007896
(87) Internationale Veröffentlichungsnummer: WO 2008/031554

(56) Entgegenhaltungen:
- EP-A- 1 657 274
- WO-A-2004/034499
- DE-A1- 10 144 815
- DE-A1- 10 246 461
- US-A1- 2003 013 817

## Beschreibung

Die vorliegende Erfindung betrifft ein Verfahren zur Herstellung einer protonenleitenden, Polyazol-enthaltenden Membran.

Polymer-Elektrolyt-Membranen (PEM) sind bereits bekannt und werden insbesondere in Brennstoffzellen eingesetzt. Dabei finden häufig Sulfonsäuremodifizierte Polymere, insbesondere perfluorierte Polymere Anwendung. Prominentes Beispiel hierfür ist Nafion™ von DuPont de Nemours, Willmington USA. Für die Protonenleitung ist ein relativ hoher Wassergehalt in der Membran erforderlich, der typischerweise bei 4 - 20 Molekülen Wasser pro Sulfonsäuregruppe liegt. Der notwendige Wassergehalt, aber auch die Stabilität des Polymers in Verbindung mit saurem Wasser und den Reaktionsgasen Wasserstoff und Sauerstoff, limitiert die Betriebstemperatur der PEM-Brennstoffzellenstacks üblicherweise auf 80 -100 °C. Unter Druck kann die Betriebstemperaturen auf >120 °C erhöht werden. Ansonsten können höhere Betriebstemperaturen ohne einen Leistungsverlust der Brennstoffzelle nicht realisiert werden.

Aus systemtechnischen Gründen sind aber höhere Betriebstemperaturen als 100 °C in der Brennstoffzelle wünschenswert. Die Aktivität der in der Membran-Elektroden-Einheit (MEE) enthaltenen Katalysatoren auf Edelmetallbasis ist bei hohen Betriebstemperaturen wesentlich besser. Insbesondere sind bei der Verwendung von sogenannten Reformaten aus Kohlenwasserstoffen deutliche Mengen an Kohlenmonoxid im Reformergas enthalten, die üblicherweise durch eine aufwendige Gasaufbereitung bzw. Gasreinigung entfernt werden müssen. Bei hohen Betriebstemperaturen steigt die Toleranz der Katalysatoren gegenüber den CO-Verunreinigungen.

Des Weiteren entsteht Wärme beim Betrieb von Brennstoffzellen. Eine Kühlung dieser Systeme auf unter 80°C kann jedoch sehr aufwendig sein. Je nach Leistungsabgabe können die Kühlvorrichtungen wesentlich einfacher gestaltet werden. Das bedeutet, dass in Brennstoffzellensystemen, die bei Temperaturen über 100°C betrieben werden, die Abwärme deutlich besser nutzbar gemacht und somit die Brennstoffzellensystem-Effizienz durch Strom-Wärmekopplung gesteigert werden kann.

Um diese Temperaturen zu erreichen, werden im Allgemeinen Membranen mit neuen Leitfähigkeitsmechanismen verwendet. Ein Ansatz hierfür ist der Einsatz von Membranen, die ohne den Einsatz von Wasser eine elektrische Leitfähigkeit zeigen. Die erste erfolgversprechende Entwicklung in diese Richtung ist in der Schrift WO 96/13872 dargelegt. Sie schlägt insbesondere die Verwendung von säuredotierten Polybenzimidazol-Membranen vor, die durch ein Gießverfahren hergestellt werden.

Weiterentwicklungen dieses Membrantyps werden in den Druckschriften DE 102 46 459 A1, DE 102 46 461 A1, DE 101 44 815 A1 und DE 102 13 540 A1 beschrieben.

DE 102 46 461 A1 offenbart protonenleitende Polymermembranen, die durch ein Verfahren erhältlich sind, welches die Schritte aufweist:
A) Herstellung einer Mischung, umfassend Polyphosphorsäure, mindestens ein Polyazol (Polymer A) und/oder mindestens ein oder mehrere Verbindung(en), die unter Einwirkung von Wärme gemäss Schritt B) zur Bildung von Polyazolen geeignet sind,
B) Erwärmen der Mischung erhältlich gemäss Schritt A) unter Inertgas auf Temperaturen von bis zu 400°C,
C) Aufbringen einer Schicht unter Verwendung der Mischung gemäss Schritt A) und/oder B) auf einem Träger,
D) Behandlung der in Schritt C) gebildeten Membran bis diese selbsttragend ist, wobei der gemäss Schritt A) und/oder Schritt B) erhältlichen Zusammensetzung mindestens ein weiteres Polymer (Polymer B), das kein Polyazol darstellt, zugefügt wird, wobei das Gewichtsverhältnis von Polyazol zu Polymer B im Bereich von 0,1 bis 50 liegt.

DE 102 46 459 A1 betrifft protonenleitende Polymermembranen auf Basis von Phosphonsäuregruppen enthaltenden Polyazolen, die durch ein Verfahren erhältlich sind, welches die Schritte umfasst:
A) Mischen von einem oder mehreren aromatischen und/oder heteroaromatischen Tetra-Amino-Verbindungen mit einer oder mehreren aromatischen und/oder heteroaromatischen Carbonsäuren oder deren Derivate, die mindestens zwei Säuregruppen pro Carbonsäure-Monomer enthalten, wobei zumindest ein Teil der Tetra-Aminoverbindungen und/oder der Carbonsäuren mindestens eine Phosphonsäuregruppe umfasst, oder Mischen von einer oder mehreren aromatischen und/oder heteroaromatischen Diaminocarbonsäuren, von denen zumindest ein Teil Phosphonsäuregruppen umfasst, in Polyphosphorsäure, unter Ausbildung einer Lösung und/oder Dispersion,
B) Erwärmen der Lösung und/oder Dispersion erhältlich gemäss Schritt A) unter Inertgas auf Temperaturen von bis zu 350°C unter Ausbildung von Polyazol-Polymeren,
C) Aufbringen einer Schicht unter Verwendung der Mischung gemäss Schritt A) und/oder B) auf einem Träger,
D) Behandlung der in Schritt C) gebildeten Membran bis diese selbsttragend ist.

DE 102 13 540 A1 betrifft protonenleitende Polymermembranen auf Basis von Polyvinylphosphonsäure, die durch ein Verfahren erhältlich sind, welches die Schritte umfasst:
A) Lösen eines Polymeren, insbesondere eines Polyazols, in vinylhaltiger Phosphonsäure,
B) Bildung eines flächigen Gebildes unter Verwendung der Lösung gemäss Schritt A) auf einem Träger
C) Aufbringen einer Starterlösung auf das gemäss Schritt B) gebildete flächige Gebilde und
D) Polymerisation der in dem flächigen Gebilde gemäss Schritt C) vorhandenen Vinylphosphonsäure.

Bei diesen Verfahren soll die Bildung des flächigen Gebildes [Schritt C) in der DE 102 46 461 A1, Schritt C) in der DE 102 46 459 A1, Schritt B) in der DE 102 13 540 A1] mittels an sich bekannter Maßnahmen, wie z. B. Gießen, Sprühen, Rakeln, Extrusion, erfolgen, die aus dem Stand der Technik zur Polymerfilm-Herstellung bekannt sind. Weitere Hinweise zur genauen Vorgehensweise sind den Druckschriften jedoch nicht zu entnehmen.

Leider ist die Herstellung der obigen Membranen durch Gießen, Sprühen oder Rakeln sehr aufwendig und teuer. Sie erfordert den Einsatz von großen Mengen Lösungsmittel zum Lösen und Aufbringen des Polymers auf den Träger, die später entfernt und zurückgewonnen werden müssen. Weiterhin ist das Verfahren sehr zeitaufwendig und erlaubt nur eine niedrige Raum-Zeit-Ausbeute. Ein zusätzliches Problem stellen die Qualitätsschwankungen dar, die häufig bei unterschiedlichen Produktionschargen zu beobachten sind. Darüber hinaus ist die Verarbeitung von Polyazolen mit vergleichsweise hohen Molekulargewichten wegen der schlechteren Löslichkeit dieser Polymere, der ansteigende Inhomogenität der entsprechenden Lösungen und der zunehmenden Ausbildung von Blasen besonders schwierig.

Auch die Extrusion der Mischungen zu den entsprechenden flächigen Gebilden ist nicht trivial. Es tritt insbesondere das Problem auf, dass wegen der vergleichsweise hohen Temperaturen die Polyazole zu Polymeren mit immer höheren Molekulargewichten weiter kondensieren, wodurch die Eigenschaften der Polymere und der Membranen, sofern sie überhaupt erhalten werden können, signifikant verschlechtert werden. Darüber hinaus wird durch das erhöhte Molekulargewicht die Verarbeitung der Polyazole zunehmend erschwert, so dass in vielen Fällen überhaupt keine Membranen mehr erhalten werden können. Die Herstellung von Membranen mit hoher Qualität und Reproduzierbarkeit ist zur Zeit nicht möglich.

Aufgabe der vorliegenden Erfindung war daher, ein verbessertes Verfahren zur Herstellung einer protonenleitenden, Polyazol-enthaltenden Membran anzugeben, welches die vorstehenden Nachteile nicht aufweist und die Herstellung der Membranen auf möglichst einfache Art und Weise großtechnisch und kostengünstig ermöglicht. Insbesondere sollte das Verfahren
⇒ möglichst wenig Lösungsmittel benötigen,
⇒ eine Herstellung der Membranen mit verbesserter Raum-Zeit-Ausbeute ermöglichen,
⇒ zu Membranen mit möglichst hoher Qualität und möglichst geringen Chargenschwankungen führen,
⇒ die Verarbeitung von Polyazolen mit vergleichsweise hohen Molekulargewichten erlauben und
⇒ die Ausbildung von Blasen in der Membran bestmöglich verhindern.

Gelöst werden diese Aufgaben durch ein Verfahren mit allen Merkmalen des Anspruchs 1.

Bei der verwendeten Phosphorsäure handelt es sich um handelsübliche Polyphosphorsäure, wie diese beispielsweise von Riedel-de Haen erhältlich ist. Die Polyphosphorsäure Hₙ₊₂PₙO₃ₙ₊₁ (n>1) besitzt üblicherweise einen Gehalt, berechnet als P₂O₅ (acidimetrisch), von mindestens 83%.

Das Polyazol enthält vorzugsweise wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII) 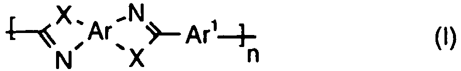 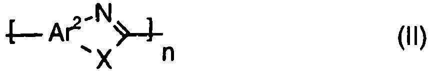 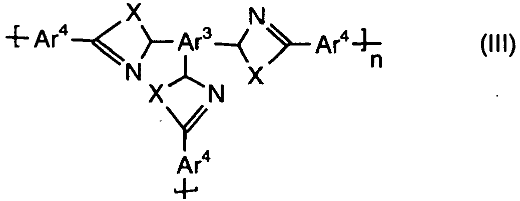 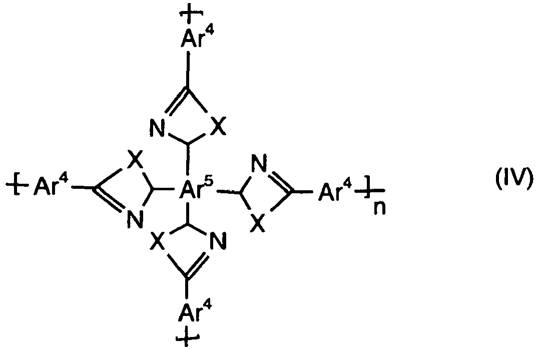 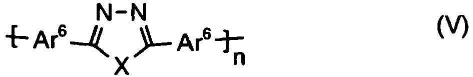 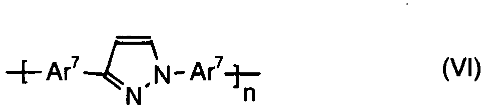 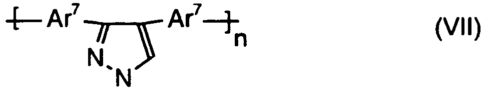 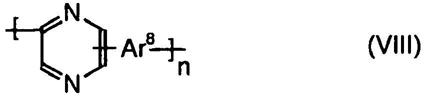 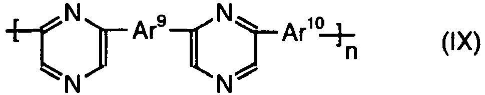 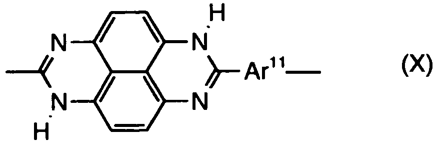 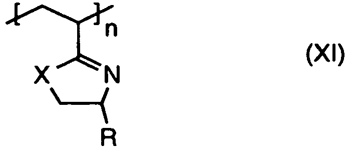 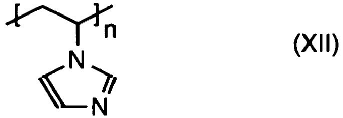 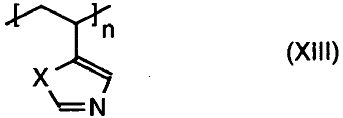 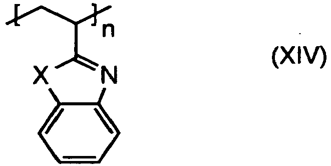 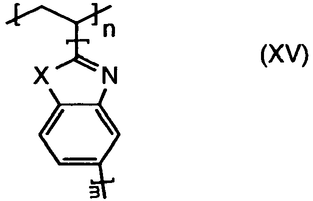 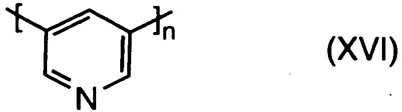 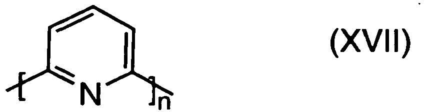 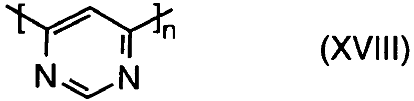 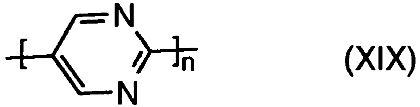 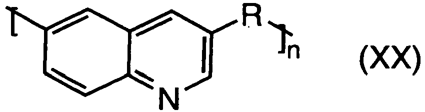 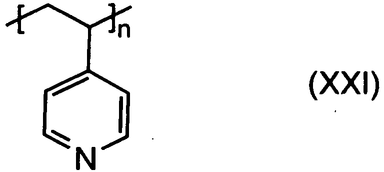 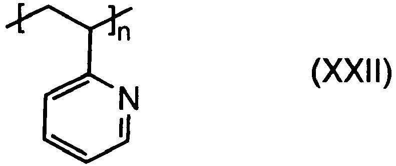 worin
- Ar: gleich oder verschieden sind und für eine vierbindige aromatische oder heteroaromatische Gruppe stehen, die ein- oder mehrkernig sein kann,
- Ar¹: gleich oder verschieden sind und für eine zweibindige aromatische oder heteroaromatische Gruppe stehen, die ein- oder mehrkernig sein kann,
- Ar²: gleich oder verschieden sind und für eine zwei oder dreibindige aromatische oder heteroaromatische Gruppe stehen, die ein- oder mehrkernig sein kann,
- Ar³: gleich oder verschieden sind und für eine dreibindige aromatische oder heteroaromatische Gruppe stehen, die ein- oder mehrkernig sein kann,
- Ar⁴: gleich oder verschieden sind und für eine dreibindige aromatische oder heteroaromatische Gruppe stehen, die ein- oder mehrkernig sein kann,
- Ar⁵: gleich oder verschieden sind und für eine vierbindige aromatische oder heteroaromatische Gruppe stehen, die ein- oder mehrkernig sein kann,
- Ar⁶: gleich oder verschieden sind und für eine zweibindige aromatische oder heteroaromatische Gruppe stehen, die ein- oder mehrkernig sein kann,
- Ar⁷: gleich oder verschieden sind und für eine zweibindige aromatische oder heteroaromatische Gruppe stehen, die ein- oder mehrkernig sein kann,
- Ar⁸: gleich oder verschieden sind und für eine dreibindige aromatische oder heteroaromatische Gruppe stehen, die ein- oder mehrkernig sein kann,
- Ar⁹: gleich oder verschieden sind und für eine zwei- oder drei- oder vierbindige aromatische oder heteroaromatische Gruppe stehen, die ein- oder mehrkernig sein kann,
- Ar¹⁰: gleich oder verschieden sind und für eine zwei- oder dreibindige aromatische oder heteroaromatische Gruppe stehen, die ein- oder mehrkernig sein kann,
- Ar¹¹: gleich oder verschieden sind und für eine zweibindige aromatische oder heteroaromatische Gruppe stehen, die ein- oder mehrkernig sein kann,
- X: gleich oder verschieden ist und für Sauerstoff, Schwefel oder eine Aminogruppe steht, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R: in allen Formeln außer Formel (XX) gleich oder verschieden für Wasserstoff, eine Alkylgruppe oder eine aromatische Gruppe und in Formel (XX) für eine Alkylengruppe oder eine aromatische Gruppe steht und
- n, m: eine ganze Zahl größer gleich 10, bevorzugt größer gleich 100 ist.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Pyridazin, Pyrimidin, Pyrazin, Triazin, Tetrazin, Pyrol, Pyrazol, Anthracen, Benzopyrrol, Benzotriazol, Benzooxathiadiazol, Benzooxadiazol, Benzopyridin, Benzopyrazin, Benzopyrazidin, Benzopyrimidin, Benzopyrazin, Benzotriazin, Indolizin, Chinolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren, die gegebenenfalls auch substituiert sein können, ab.

Dabei ist das Substitionsmuster von Ar¹, Ar⁴, Ar⁶, Ar⁷, Ar⁸, Ar⁹, Ar¹⁰, Ar¹¹ beliebig, im Falle vom Phenylen beispielsweise kann Ar¹, Ar⁴, Ar⁶, Ar⁷, Ar⁸, Ar⁹, Ar¹⁰, Ar¹¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen, wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine) und Poly(tetrazapyrene).

In einer weiteren Ausführungsform der vorliegenden Erfindung ist das Polyazol ein Copolymer, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polyazol ein Homopolymer, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen

Polymere enthaltend wiederkehrende Benzimidazoleinheiten werden durch die nachfolgende Formeln wiedergegeben: 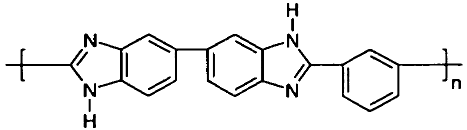 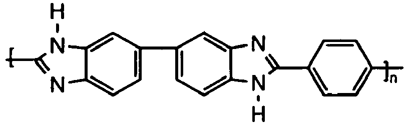 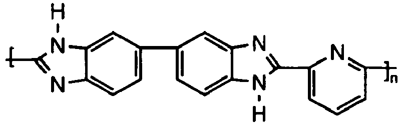 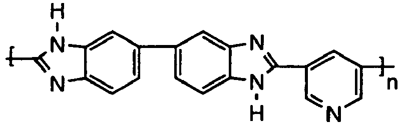 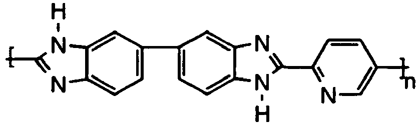 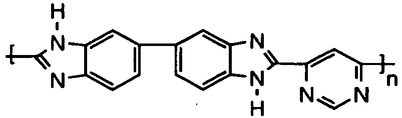 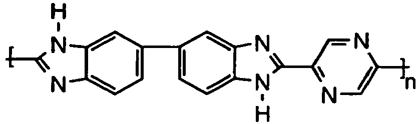 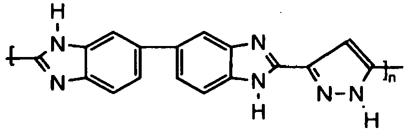 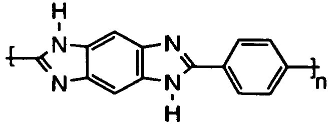 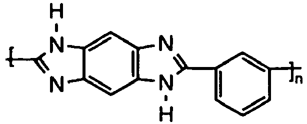 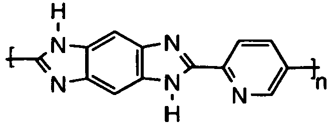 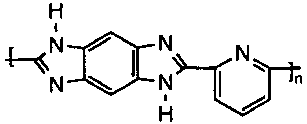 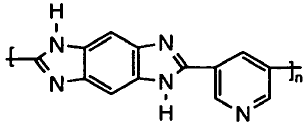 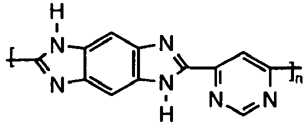 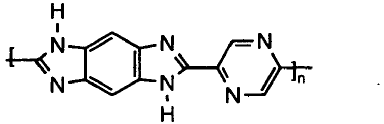 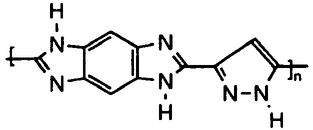 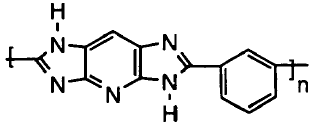 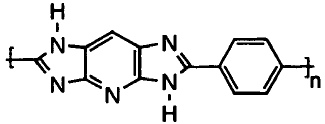 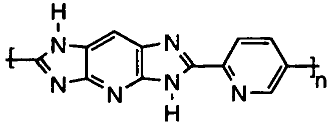 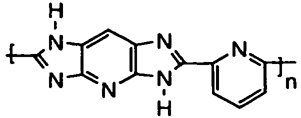 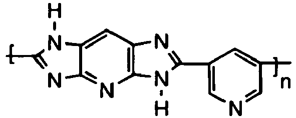 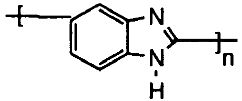 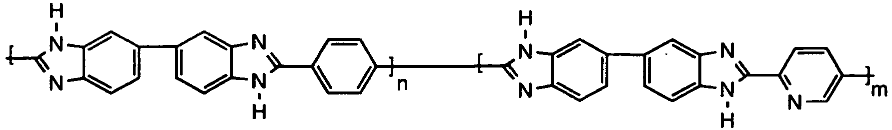 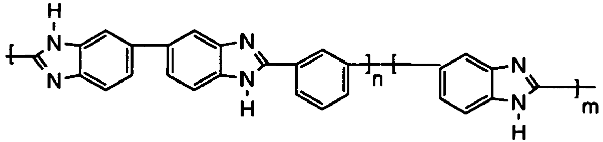 wobei n und m ganze Zahlen größer gleich 10, vorzugsweise größer gleich 100, sind.

Im Rahmen einer besonders bevorzugten Variante der vorliegenden Erfindung weisen die Polyazole mindestens eine Sulfonsäure- und/oder Phosphonsäuregruppe auf. Derartige Polymere werden in der Druckschrift DE 102 46 459 A1 beschrieben.

Die eingesetzten Polyazole, insbesondere jedoch die Polybenzimidazole zeichnen sich durch ein hohes Molekulargewicht aus. Gemessen als intrinsische Viskosität beträgt diese mindestens 0,2 dl/g, vorzugsweise 0,8 bis 10 dl/g, insbesondere 1 bis 10 dl/g.

Bevorzugte Polybenzimidazole sind unter dem Handelsnamen ®Celazole kommerziell erhältlich.

Gemäß einer besonders bevorzugten Variante des erfindungsgemäßen Verfahren erfolgt die Herstellung des Polyazols in situ. Hierzu können der Polyphosphorsäure ein oder mehrere Verbindungen beigefügt werden, die unter Einwirkung von Wärme zur Bildung von Polyazolen fähig sind.

Insbesondere sind Mischungen geeignet, die ein oder mehreren aromatische und/oder heteroaromatische Tetra-Amino-Verbindungen und eine oder mehrere aromatische und/oder heteroaromatische Carbonsäuren oder deren Derivate, die mindestens zwei Säuregruppen pro Carbonsäure-Monomer umfassen. Des weiteren können ein oder mehrere aromatische und/oder heteroaromatische Diaminocarbonsäuren zur Herstellung von Polyazolen eingesetzt werden.

Zu den aromatischen und heteroaromatischen Tetra-Amino-Verbindungen gehören unter anderem 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan sowie deren Salze, insbesondere deren Mono-, Di-, Tri- und Tetrahydrochloridderivate. Hiervon sind 3,3',4,4'-Tetraaminobiphenyl, 2,3,5,6-Tetraaminopyridin und 1,2,4,5-Tetraaminobenzol besonders bevorzugt.

Des weiteren kann die Mischung aromatische und/oder heteroaromatische Carbonsäuren umfassen. Hierbei handelt es sich um Dicarbonsäuren und Tricarbonsäuren und Tetracarbonsäuren oder deren Estern oder deren Anhydride oder deren Säurehalogenide, insbesondere deren Säurehalogenide und/oder Säurebromide. Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride.

Bei den aromatischen Tricarbonsäuren oder deren C1-C20-Alkyl- Ester oder C5-C12-Aryl-Ester oder deren Säureanhydride oder deren Säurechloride handelt es sich bevorzugt um 1,3,5-Benzol-tricarbonsäure (Trimesic acid), 1,2,4-Benzol-tricarbonsäure (Trimellitic acid), (2-Carboxyphenyl)iminodiessigsäure, 3,5,3'-Biphenyltricarbonsäure, 3,5,4'-Biphenyltricarbonsäure.

Bei den aromatischen Tetracarbonsäuren oder deren C1-C20-Alkyl- Ester oder C5-C12-Aryl-Ester oder deren Säureanhydride oder deren Säurechloride handelt es sich bevorzugt um 3,5,3',5'-Biphenyltetracarbonsäure, 1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthalintetracarbonsäure.

Bei den heteroaromatischen Carbonsäuren handelt es sich bevorzugt um heteroaromatische Dicarbonsäuren und Tricarbonsäuren und Tetracarbonsäuren oder deren Estern oder deren Anhydride. Als heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5- dicarbonsäure, Pyridin-2,6-dicarbonsäure, Pyridin-2,4-dicarbonsäure, 4-Phenyl-2,5- pyridindicarbonsäure, 3,5-Pyrazoldicarbonsäure, 2,6 -Pyrimidindicarbonsäure, 2,5- Pyrazindicarbonsäure, 2,4,6-Pyridintricarbonsäure, Benzimidazol-5,6-dicarbonsäure sowie deren C1- C20-AlkylEster oder C5-C12-Aryl-Ester, oder deren Säureanhydride oder deren Säurechloride.

Der Gehalt an Tricarbonsäure oder Tetracarbonsäuren (bezogen auf eingesetzte Dicarbonsäure) beträgt zwischen 0 und 30 Mol-%, vorzugsweise 0,1 und 20 Mol %, insbesondere 0,5 und 10 Mol-%.

Des weiteren können auch aromatische und heteroaromatische Diaminocarbonsäuren eingesetzt werden. Zu diesen gehört unter anderem Diaminobenzoesäure, 4-Phenoxycarbonyl-3,'4'-diaminodiphenylether und deren Mono- und Dihydrochloridderivate.

Bevorzugt werden Mischungen von mindestens 2 verschiedenen aromatischen Carbonsäuren eingesetzt. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt zwischen 1:99 und 99:1, vorzugsweise zwischen 1:50 bis 50:1.

Bei diesen Mischungen handelt es sich insbesondere um Mischungen von N-heteroaromatischen Dicarbonsäuren und aromatischen Dicarbonsäuren. Nicht limitierende Beispiele für Dicarbonsäuren sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure.

Soll ein möglichst hohes Molekulargewicht erzielt werden, so liegt das Molverhältnis von Carbonsäuregruppen zu Aminogruppen bei der Umsetzung von Tetra-Amino-Verbindungen mit einer oder mehreren aromatischen Carbonsäuren oder deren Estern, die mindestens zwei Säuregruppen pro Carbonsäure-Monomer enthalten, vorzugsweise in der Nähe von 1:2.

Bevorzugt werden mindestens 0,5 Gew.-%, insbesondere 1 bis 30 Gew.-% und besonders bevorzugt 2 bis 15 Gew.-% Monomere zur Herstellung von Polyazolen eingesetzt, jeweils bezogen auf das resultierende Gewicht der zu verwendenden Zusammensetzung.

Werden die Polyazole unmittelbar in der Polyphosphorsäure aus den Monomeren hergestellt, zeichnen sich die Polyazole durch ein hohes Molekulargewicht aus. Dies gilt insbesondere für die Polybenzimidazole. Gemessen als Intrinsische Viskosität liegt diese im Bereich von 0,3 bis 10 dl/g, vorzugsweise im Bereich von 1 bis 5 dl/g.

Insofern auch Tricarbonsäuren oder Tetracarbonsäre eingesetzt werden, wird hierdurch eine Verzweigung/ Vernetzung des gebildeten Polymeren erzielt. Diese trägt zur Verbesserung der mechanischen Eigenschaft bei.

Gemäß einem weiteren Aspekt der vorliegenden Erfindung werden Verbindungen verwendet, die unter Einwirkung von Wärme zur Bildung von Polyazolen geeignet sind, wobei diese Verbindungen durch Umsetzung von einem oder mehreren aromatischen und/oder heteroaromatischen Tetra-Amino-Verbindungen mit einer oder mehreren aromatischen und/oder heteroaromatischen Carbonsäuren bzw. deren Derivate, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 400°C, insbesondere bis zu 350°C, bevorzugt bis zu 280°C erhältlich sind. Die zur Herstellung dieser Präpolymere einzusetzenden Verbindungen wurden zuvor dargelegt.

Die jeweiligen Anteile der Polyphosphorsäure und des Polyazols unterliegen Beschränkungen. Für die Zwecke der vorliegenden Erfindung geeignete Zusammensetzungen enthalten, jeweils bezogen auf ihr Gesamtgewicht (Einwaage) 95,0 Gew.-% bis 99,5 Gew.-%, Polyphosphorsäure und 5,0 Gew.-% bis 0,5 Gew.-% Polyazol.

Die bei vorliegenden Verfahren einzusetzende Zusammensetzung liegt vorzugsweise als Dispersion, Suspension oder Lösung vor und kann ggf. geringe Feststoffanteile und/oder Gelanteile umfassen. Besonders bevorzugt ist der Anteil abfiltrierbarer Bestandteile jedoch kleiner 30,0 Gew.-%, vorzugsweise kleiner 10,0 Gew.-%, insbesondere kleiner 5,0 Gew.-%, jeweils bezogen auf das Gesamtgewicht der Zusammensetzung. Die Bestimmung der abfiltrierbaren Mengen erfolgt dabei günstigerweise bei der Temperatur, bei welcher das erfindungsgemäße Verfahren durchgeführt wird (Temperatur an der Öffnung). Weiterhin werden vorzugsweise Siebe mit Sieböffnungen (Maschen) kleiner 1,0 mm, bevorzugt kleiner 500 µm, besonders bevorzugt kleiner 100 µm, eingesetzt.

Die bei dem Verfahren einzusetzende Zusammensetzung weist eine Lösungsviskosität im Bereich von 10 Pas bis 1000 Pas, bevorzugt im Bereich von 20 Pas bis 800 Pas, besonders bevorzugt im Bereich von 30 Pas bis 600 Pas, insbesondere im Bereich von 50 Pas bis 500 Pas, auf. Die Lösungsviskosität wird nach DIN 53018 bei einer Scherrate von 30 Hz zwischen zwei 20 mm Platten gemessen. Die Messung der Viskosität erfolgt bei der Temperatur, die der Temperatur an der Öffnung während der Herstellung der Membran entspricht.

Weiterhin weist das Polyazol in der Zusammensetzung günstigerweise eine Grenzviskosität (IV) in mindestens 96 %-iger Schwefelsäure von 0,3 bis 10, besonders bevorzugt von 1 bis 5, auf. Dabei kann die Grenzviskosität auf an sich bekannte Weise durch Vermessen von Konzentrationsreihen und Extrapolation auf unendliche Verdünnung ermittelt werden. Die Messungen werden vorzugsweise bei einer Temperatur zwischen 0°C und 100°C, besonders bevorzugt zwischen 20°C und 80°C, insbesondere bei 25°C, durchgeführt. Ferner hat sich der Einsatz von Ostwald-Viskosimetern und/oder Viskosimetern nach Ubbelohde ganz besonders bewährt.

Weitere Informationen zu den Viskositätsgrößen und den zugehörigen Bestimmungsverfahren können der gängigen Fachliteratur, z. B. Ullmann 1, 67-85; (4.) 5, 755-778, entnommen werden, deren Offenbarung hiermit durch Bezugnahme eingeschlossen wird.

Im Rahmen einer sehr bevorzugten Variante der vorliegenden Erfindung enthält die einzusetzende Zusammensetzung weiterhin mindestens ein Polymer, das kein Polyazol darstellt (Polymer (B). Diese Polymer kann unter anderem gelöst, dispergiert oder suspendiert vorliegen.

Hierbei liegt das Gewichtsverhältnis von Polyazol zu Polymer (B) bevorzugt im Bereich von 0,1 bis 50, vorzugsweise im Bereich von 0,2 bis 20, besonders bevorzugt im Bereich von 1 bis 10. Falls das Polyazol erst in situ gebildet wird, kann das Gewichtsverhältnis rechnerisch aus dem Gewicht der Monomeren zur Bildung des Polyazols erhalten werden, wobei die bei der Kondensation freigesetzten Verbindungen, beispielsweise Wasser zu berücksichtigen sind.

Zu den bevorzugten Polymeren gehören unter anderem Polyolefine, wie Poly(cloropren), Polyacetylen, Polyphenylen, Poly(*p*-xylylen), Polyarylmethylen, Polyarmethylen, Polystyrol, Polymethylstyrol, Polyvinylalkohol, Polyvinylacetat, Polyvinylether, Polyvinylamin, Poly(N-vinylacetamid), Polyvinylimidazol, Polyvinylcarbazol, Polyvinylpyrrolidon, Polyvinylpyridin, Polyvinylchlorid, Polyvinylidenchlorid, Polytetrafluorethylen, Polyhexafluorpropylen, Copolymere von PTFE mit Hexafluoropropylen, mit Perfluorpropylvinylether, mit Trifluoronitrosomethan, mit Sulfonylfluoridvinylether, mit Carbalkoxyperfluoralkoxyvinylether, Polychlortrifluorethylen, Polyvinylfluorid, Polyvinylidenfluorid, Polyacrolein, Polyacrylamid, Polyacrylnitril, Polycyanacrylate, Polymethacrylimid, Cycloolefinische Copolymere, insbesondere aus Norbornen; Polymere mit C-O-Bindungen in der Hauptkette, beispielsweise Polyacetal, Polyoxymethylen, Polyether, Polypropylenoxid, Polyepichlorhydrin, Polytetrahydrofuran, Polyphenylenoxid, Polyetherketon, Polyester, insbesondere Polyhydroxyessigsäure, Polyethylenterephthalat, Polybutylenterephthalat, Polyhydroxybenzoat, Polyhydroxypropionsäure, Polypivalolacton, Polycaprolacton, Polymalonsäure, Polycarbonat; Polymere C-S-Bindungen in der Hauptkette, beispielsweise Polysulfidether, Polyphenylensulfid, Polyethersulfon; Polymere C-N-Bindungen in der Hauptkette, beispielsweise Polyimine, Polyisocyanide,Polyetherimin, Polyanilin, Polyamide, Polyhydrazide, Polyurethane, Polyimide, Polyazole, Polyazine; Flüssigkristalline Polymere, insbesondere Vectra sowie Anorganische Polymere, beispielsweise Polysilane, Polycarbosilane, Polysiloxane, Polykieselsäure, Polysilikate, Silicone, Polyphosphazene und Polythiazyl.

Des weiteren gehören zu den bevorzugten Polymeren (B) auch Polymere mit kovalent gebundenen Säuregruppen. Diese Säuregruppen umfassen insbesondere Sulfonsäuregruppen. Die mit Sulfonsäuregruppen modifizierten Polymere besitzen vorzugsweise einen Gehalt an Sulfonsäuregruppen im Bereich von 0,5 bis 3 meq/g. Dieser Wert wird über die sog. lonenaustauschkapazität (IEC) bestimmt.

Zur Messung der IEC werden die Sulfonsäuregruppen in die freie Säure überführt. Hierzu wird das Polymere auf bekannte Weise mit Säure behandelt, wobei überschüssige Säure durch Waschen entfernt wird. So wird das sulfonierte Polymer zunächst 2 Stunden in siedendem Wasser behandelt. Anschließend wird überschüssiges Wasser abgetupft und die Probe während 15 Stunden bei 160°C im Vakuumtrockenschrank bei p<1 mbar getrocknet. Dann wird das Trockengewicht der Membran bestimmt. Das so getrocknete Polymer wird dann in DMSO bei 80°C während 1 h gelöst. Die Lösung wird anschließend mit 0,1 M NaOH titriert. Aus dem Verbrauch der Säure bis zum Equivalentpunkt und dem Trockengewicht wird dann die lonenaustauschkapazität (IEC) berechnet.

Derartige Polymere sind in der Fachwelt bekannt. So können Sulfonsäuregruppen enthaltende Polymere beispielsweise durch Sulfonierung von Polymeren hergestellt werden. Verfahren zur Sulfonierung von Polymeren sind in F. Kucera et. al. Polymer Engineering and Science1988, Vol. 38, No 5, 783-792 beschrieben. Hierbei können die Sulfonierungsbedingungen so gewählt werden, dass ein niedriger Sulfonierungsgrad entsteht (DE-A-19959289).

So wurde eine weitere Klasse nichtfluorierter Polymere durch Sulfonierung von hochtemperaturstabilen Thermoplasten entwickelt. So sind sulfonierte Polyetherketone (DE-A-4219077, WO96/01177), sulfonierte Polysulfone (J. Membr. Sci. 83 (1993) p.211) oder sulfoniertes Polyphenylensulfid (DE-A-19527435) bekannt.

US-A-6110616 beschreibt Copolymere aus Butadien und Styrol und deren anschliesende Sulfonierung zur Verwendung für Brennstoffzellen.

Des weiteren können derartige Polymere auch durch Polyreaktionen von Monomeren erhalten werden, die Säuregruppen umfassen. So können perfluorinierte Polymere wie in US-A-5422411 beschrieben durch Copolymerisation aus Trifluorostyrol und sulfonylmodifiziertem Trifuorostyrol hergestellt werden.

Zu diesen Perfluorosulfonsäurepolymeren gehört unter anderem Nafion^{®} (US-A-3692569). Dieses Polymer kann wie in US-A-4453991 beschrieben in Lösung gebracht und dann als lonomer eingesetzt werden.

Zu den bevorzugten Polymeren mit Säuregruppen gehören unter anderem sulfonierte Polyetherketone, sulfonierte Polysulfone, sulfonierte Polyphenylensulfide, perfluorinierte sulfonsäuregruppenhaltige Polymere, wie in US-A-3692569, US-A-5422411 und US-A-6110616 beschrieben.

Zur Anwendung in Brennstoffzellen mit einer Dauergebrauchstemperatur oberhalb 100°C werden solche Polymere (B) bevorzugt, die eine Glasübergangstemperatur oder Vicat-Erweichungstemperatur VST/A/50 von mindestens 100°C, bevorzugt mindestens 150°C und ganz besonders bevorzugt mindestens 180°C haben. Hierbei sind Polysulfone mit einer Vicat-Erweichungstemperatur VST/A/50 von 180°C bis 230°C bevorzugt.

Darüber hinaus sind Polymere (B) bevorzugt, die eine geringe Löslichkeit und/oder Abbaubarkeit in Phosphorsäure aufweisen. Gemäß einer besonderen Ausführungsform der vorliegenden Erfindung ist nimmt das Gewicht durch eine Behandlung mit 85%iger Phosphorsäure nur unwesentlich ab. Vorzugsweise ist das Gewichtsverhältnis der Platte nach der Phosphorsäure-Behandlung zum Gewicht der Platte vor der Behandlung größer oder gleich 0,8, insbesondere größer oder gleich 0,9 und besonders bevorzugt größer oder gleich 0,95. Dieser Wert wird an einer Platte aus Polymer (B) gemessen, die 2 mm dick, 5 cm lang und 2 cm breit ist. Diese Platte wird in Phosphorsäure gegeben, wobei das Gewichtsverhältnis von Phosphorsäure zu Platte 10 beträgt. Anschließend wird die Phosphorsäure unter Rühren 24 Stunden auf 100°C erhitzt. Anschließend wird die Platte durch Waschen mit Wasser von überschüssiger Phosphorsäure befreit und getrocknet. Hiernach wird die Platte erneut gewogen.

Zu den bevorzugten Polymeren gehören Polysulfone, insbesondere Polysulfon mit Aromaten in der Hauptkette. Gemäß einem besonderen Aspekt der vorliegenden Erfindung weisen bevorzugte Polysulfone und Polyethersulfone eine Schmelzvolumenrate MVR 300/21,6 kleiner oder gleich 40 cm³/ 10 min, insbesondere kleiner oder gleich 30 cm³/ 10 min und besonders bevorzugt kleiner oder gleich 20 cm³/ 10 min gemessen nach ISO 1133 auf.

Zur Polymerisation wird die Mischung wird auf eine Temperatur von bis zu 400°C, insbesondere 350°C, vorzugsweise bis zu 280°C, insbesondere 100°C bis 250°C und besonders bevorzugt im Bereich von 200°C bis 250°C erhitzt. Hierbei wird vorzugsweise ein Inertgas, beispielsweise Stickstoff oder ein Edelgas, wie Neon oder Argon, eingesetzt.

Zur weiteren Verbesserung der anwendungstechnischen Eigenschaften können der Zusammensetzung zusätzlich noch Füllstoffe, insbesondere protonenleitende Füllstoffe, sowie zusätzliche Säuren zugesetzt werden.

Nicht limitierende Beispiele für protonenleitende Füllstoffe sind
- Sulfate wie:: C_{S}HSO₄, Fe(SO₄)₂, (NH₄)₃H(SO₄)₂, LiHSO₄, NaHSO₄, KHSO₄, RbSO₄, LiN₂H₅SO₄, NH₄HSO₄,
- Phosphate wie: Zr₃(PO₄)₄, Zr(HPO₄)₂, HZr₂(PO₄)_{3,} UO₂PO₄.3H₂O, H₈UO₂PO₄, Ce(HPO₄)₂, Ti(HPO₄)₂, KH₂PO₄, NaH₂PO₄, LiH₂PO₄, NH₄H₂PO₄, CsH₂PO₄, CaHPO₄, MgHPO₄, HSbP₂O₈, HSb₃P₂O₁₄, H₅Sb₅P₂O₂₀,
- Polysäure wie: H₃PW₁₂O₄₀.nH₂O (n=21-29), H₃SiW₁₂O₄₀.nH₂O (n=21-29), HₓWO₃, HSbWO₆, H₃PMO₁₂O₄₀, H₂Sb₄O₁₁, HTaWO₆, HNbO₃, HTiNbO₅, HTiTaO₅, HSbTeO₆, H₅Ti₄O₉, HSbO₃, H₂MoO₄
- Selenite und Arsenide wie: (NH₄)₃H(SeO₄)₂, UO₂AsO₄, (NH₄)₃H(SeO₄)₂, KH₂AsO₄, Cs₃H(SeO₄)₂, Rb₃H(SeO₄)₂,
- Oxide wie: Al₂O₃, Sb₂O₅, ThO₂, SnO₂, ZrO₂, MoO₃
- Silikate wie: Zeolithe, Zeolithe(NH₄+), Schichtsilikate, Gerüstsilikate, H-Natrolite, H-Mordenite, NH₄-Analcine, NH₄-Sodalite, NH₄-Gallate, H-Montmorillonite
- Säuren wie: HClO₄, SbF₅
- Füllstoffe wie: Carbide, insbesondere SiC, Si₃N₄, Fasern, insbesondere Glasfasern, Glaspulvern und/oder Polymerfasern, bevorzugt auf Basis von Polyazolen.

Diese Additive können in der Zusammensetzung in üblichen Mengen enthalten sein, wobei jedoch die positiven Eigenschaften, wie hohe Leitfähigkeit, hohe Lebensdauer und hohe mechanische Stabilität der Membran durch Zugabe von zu großen Mengen an Additiven nicht allzu stark beeinträchtigt werden sollten. Im allgemeinen umfasst die resultierende Membran höchstens 80 Gew.-%, vorzugsweise höchstens 50 Gew.-% und besonders bevorzugt höchstens 20 Gew.-% Additive.

Als weiteres kann die Zusammensetzung auch perfluorierte Sulfonsäure-Additive (vorzugsweise 0,1-20 Gew.-%, bevorzugt 0,2-15 Gew.%, ganz bevorzugt 0,2-10 Gew.-%) enthalten. Diese Additive führen zur Leistungsverbesserung, in der Nähe der Kathode zur Erhöhung der Sauerstofflöslichkeit und Sauerstoffdiffusion und zur Verringerung der Adsorbtion von Phosphorsäure und Phosphat zu Platin. (Electrolyte additives for phosphoric acid fuel cells. Gang, Xiao; Hjuler, H. A.; Olsen, C.; Berg, R. W.; Bjerrum, N. J. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.)

Nicht limitierende Beispiele für persulfonierte Additive sind: Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat, Perflurosulfoimide und Nafion.

Bei dem erfindungsgemäßen Verfahren wird die Polyphosphorsäure und mindestens ein Polyazol enthaltende Zusammensetzung durch eine Öffnung, vorzugsweise eine Düse, gepresst. Eine Düse bezeichnet ein sich noch vorn stetig verengendes Stück, durch welches die Lösung geleitet wird.

Die Öffnung ist schlitzförmig ausgebildet und besitzt eine längliche, schmale, vorzugsweise rechteckige Form. Die Spaltbreite des Schlitzes ist bevorzugt im Bereich von 10 cm bis 2,0 m, besonders bevorzugt im Bereich von 20 cm bis 50 cm. Die Länge des Spalts ist günstigerweise im Bereich von 250 µm bis 5 mm, insbesondere im Bereich von 800 µm bis 1600 µm. Das Verhältnis der Spaltbreite zur Spaltlänge ist bevorzugt im Bereich von 10:1 bis 10000:1, besonders bevorzugt im Bereich von 100:1 bis 1000:1.

Man führt das Verfahren bei einer Temperatur, gemessen an der Öffnung, im Bereich von 120°C bis 300°C, bevorzugt im Bereich von 120°C bis 180°C, besonders bevorzugt im Bereich von 165°C bis 170°C, durch.

Die sonstigen Verfahrensparameter können prinzipiell frei gewählt und auf den jeweiligen Einzelfall abgestimmt werden. Dennoch hat es sich als besonders günstig erwiesen, den Druck, mit welchem die Lösung durch die Öffnung gepresst wird, auf einen Wert von mindestens 0,1 bar, bevorzugt von mindestens 1,5 bar, insbesondere auf einen Wert im Bereich von 2 bar bis 2,5 bar, einzustellen.

Im Rahmen einer ganz besonders bevorzugten Ausführungsform ist die Öffnung ein Teil eines Extruders, durch welche die Lösung extrudiert wird. Der Einsatz von Einschneckenextrudern oder Doppelschneckenextrudern hat sich in diesem Zusammenhang ganz besonders bewährt.

Weiterhin ist es erfindungsgemäß ganz besonders günstig, das Polyazol und die Polyphosphorsäure im Extruder zu mischen. Sofern das Polyazol im Extruder in situ hergestellt werden soll, kann der Extruder Bereiche mit unterschiedlichen Temperaturen (Synthesebereich, Öffnung) aufweisen. Wesentlich ist lediglich, dass die erfindungsgemäßen Kriterien, d. h. die Lösungsviskosität und die Extrusionstemperatur an der Öffnung, eingehalten werden.

Die durch die Düse gepresste Zusammensetzung wird vorzugsweise auf einen Träger, insbesondere auf eine Elektrode, aufgetragen. Anschließend wird die extrudierte Zusammensetzung verfestigt.

Im Rahmen einer besonders bevorzugten Variante der vorliegenden Erfindung erfolgt die Auftragung der Zusammensetzung auf den Träger derart, dass mehrere Felder der Zusammensetzung auf dem Träger gebildet werden, die nicht untereinander verbunden sind. Dies kann z. B. dadurch erreicht werden, dass man die Zusammensetzung durch einen geteilten Spalt presst oder die Auftragung auf den Träger kurzzeitig unterbricht und an einer anderen Stelle fortsetzt. Ein Vorteil dieser Vorgehensweise ist u. a. die Möglichkeit, die Gestalt der Membran entsprechend den Anforderungen direkt maßzuschneidern und ein späteres Zuschneiden zu vermeiden.

Die erfindungsgemäße Verfestigung der extrudierten Membran erfolgt durch Abkühlung, z. B. durch Kaltblasen, und/oder eine Nachbehandlung (Hydrolyse und/oder Vernetzung), bevorzugt mit einer Flüssigkeit oder einem Flüssigkeitsgemisch, vorzugsweise in einem Tauchbad, welches die vorstehend genannten Flüssigkeiten enthält.

Die vorstehend genannten Flüssigkeiten temperieren die extrudierte Membran auf einen vorgewählten Temperaturbereich, so dass die Abkühlung und/oder Nachbehandlung (Hydrolyse und/oder Vernetzung) über ein vorgewähltes Temperaturprofil erfolgen kann.

Die bei dem Verfahren erhaltene, extrudierte Membran wird vorzugsweise einer Nachbehandlung mit Feuchtigkeit unterzogen, so dass die anwesende Polyphosphorsäure unter Ausbildung niedermolekularer Polyphosphorsäure und/oder Phosphorsäure zumindest teilweise hydrolysiert. Die Behandlung der Membran erfolgt vorzugsweise bei Temperaturen im Bereich von -100°C und 150°C, vorzugsweise bei Temperaturen zwischen 10°C und 120°C, insbesondere zwischen Raumtemperatur (20°C) und 110°C, besonders bevorzugt zwischen 30°C und 100°C. Weiterhin geschieht die Behandlung bevorzugt unter Normaldruck, sie kann aber auch unter Einwirkung von Druck erfolgen. Im Rahmen einer besonders bevorzugten Variante der vorliegenden Erfindung wird die Membran durch ein Bad, welches Wasser oder wässrige Flüssigkeiten umfasst, geführt.

Die Hydrolyse der Polyphosphorsäure bedingt eine Verfestigung der Zusammensetzung und eine Abnahme der Schichtdicke und Ausbildung einer Membran. Die verfestigte Membran hat im Allgemeinen eine Dicke zwischen 15 und 3000 µm, vorzugsweise 20 und 2000 µm, insbesondere zwischen 20 und 1500 µm, wobei die Membran selbsttragend ist.

Die obere Temperaturgrenze für die Feuchtigkeitsbehandlung beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die Hydrolyse kann auch in Klimakammern erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung, beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die Hydrolyse bei Raumtemperatur (20°C) mit Umgebungsluft einer relativen Luftfeuchtigkeit von 40-80% durchgeführt beträgt die Behandlungsdauer vorzugsweise zwischen 1 und 200 Stunden.

Die erhaltene Membran kann selbsttragend ausgebildet werden, d. h. sie kann vom Träger ohne Beschädigung abgelöst und anschließend ggf. direkt weiterverarbeitet werden.

Über den Grad der Hydrolyse, d.h. die Dauer, Temperatur und Umgebungsfeuchtigkeit, ist die Konzentration an Phosphorsäure und damit die Leitfähigkeit der erfindungsgemäßen Polymermembran einstellbar. Erfindungsgemäß wird die Konzentration der Phosphorsäure als Mol Säure pro Mol Wiederholungseinheit des Polymers angegeben. Im Rahmen der vorliegenden Erfindung beträgt die Konzentration (Mol Phosporsäure bezogen auf eine Wiederholeinheit der Formel (III), d.h. Polybenzimidazol) zwischen 10 und 90, insbesondere zwischen 12 und 85, insbesondere bevorzugt zwischen 15 und 80, Mol Phosporsäure. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich.

In einer weiteren Ausführungsform der Erfindung handelt es sich bei den zur Nachbehandlung genannten Flüssigkeiten bzw. Flüssigkeitsgemischen um solche, die eine Hydrolyse der Polyphosphorsäure ermöglichen (Hydrolysierflüssigkeit).

Die Behandlung der extrudierten Membran erfolgt bei den vorstehend genannten Temperaturen. Die Hydrolyseflüssigkeit umfasst neben Wasser auch mindestens eine Sauerstoffsäure des Phosphors und/oder Schwefels. Auch hier erfolgt die Behandlung vorzugsweise unter Normaldruck, kann aber auch unter Einwirkung von Druck erfolgen.

Die Hydrolyseflüssigkeit kann eine Lösung darstellen, wobei die Flüssigkeit auch suspendierte und/oder dispergierte Bestandteile enthalten kann. Die Viskosität der Hydrolyseflüssigkeit kann in weiten Bereichen liegen, wobei zur Einstellung der Viskosität eine Zugabe von Lösungsmitteln oder eine Temperaturerhöhung erfolgen kann. Vorzugsweise liegt die dynamische Viskosität im Bereich von 0,1 bis 10000 mPa*s, insbesondere 0,2 bis 2000 mPa*s, wobei diese Werte beispielsweise gemäß DIN 53015 gemessen werden können.

Die Nachbehandlung kann mit jeder bekannten Methode erfolgen. Beispielsweise kann die Membran in ein Flüssigkeitsbad getaucht oder mit der Hydrolyseflüssigkeit besprüht werden. Weiterhin kann die Hydrolyseflüssigkeit über die Membran gegossen werden.

Zu den Sauerstoffsäuren des Phosphors und/oder Schwefels gehören insbesondere Phosphinsäure, Phosphonsäure, Phosphorsäure, Hypodiphosphonsäure Hypodiphosphorsäure, Oligophosphorsäuren, schwefelige Säure, dischwefelige Säure und/oder Schwefelsäure. Diese Säuren können einzeln oder als Mischung eingesetzt werden.

Des Weiteren umfassen die Sauerstoffsäuren des Phosphors und/oder Schwefels radikalisch polymerisierbare Monomere, die Phosphonsäure- und/oder Sulfonsäuregruppen umfassen. In dieser Ausführungsform kann die Flüssigkeit, insofern diese wasserhaltig ist, eine Hydrolyse bewirken und andererseits durch nachfolgende Polymerisation der Monomeren eine Verfestigung bewirken. Insofern die Nachbehandlungsflüssigkeit auch zur Vernetzung befähigte Verbindungen aufweist, kann die Verfestigung auch durch die Vernetzung erfolgen.

Phosphonsäuregruppen umfassende Monomere sind in der Fachwelt bekannt. Es handelt sich hierbei um Verbindungen, die mindestens eine Kohlenstoff-Kohlenstoff-Doppelbindung und mindestens eine Phosphonsäuregruppe aufweisen. Vorzugsweise weisen die zwei Kohlenstoffatome, die Kohlenstoff-Kohlenstoff-Doppelbindung bilden, mindestens zwei, vorzugsweise 3 Bindungen zu Gruppen auf, die zu einer geringen sterischen Hinderung der Doppelbindung führen. Zu diesen Gruppen gehören unter anderem Wasserstoffatome und Halogenatome, insbesondere Fluoratome. Im Rahmen der vorliegenden Erfindung ergibt sich das Phosphonsäuregruppen umfassende Polymer aus dem Polymerisationsprodukt, das durch Polymerisation des Phosphonsäuregruppen umfassenden Monomers allein oder mit weiteren Monomeren und/oder Vernetzern erhalten wird.

Das Phosphonsäuregruppen umfassende Monomer kann ein, zwei, drei oder mehr Kohlenstoff-Kohlenstoff-Doppelbindungen umfassen. Des weiteren kann das Phosphonsäuregruppen umfassende Monomer ein, zwei, drei oder mehr Phosphonsäuregruppen enthalten.

Im allgemeinen enthält das Phosphonsäuregruppen umfassende Monomer 2 bis 20, vorzugsweise 2 bis 10 Kohlenstoffatome.

Bei dem Phosphonsäuregruppen umfassenden Monomer handelt es sich vorzugsweise um Verbindungen der Formel 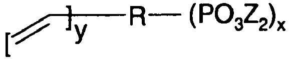 worin
- R: eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
- y: eine ganze Zahl 1, 2, 3, 4, 5, 6, 7, 8, 9 oder 10 bedeutet
und/oder der Formel 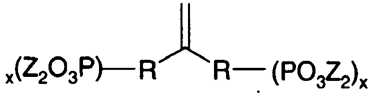 worin
- R: eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
und/oder der Formel 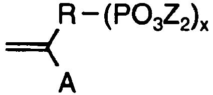 worin
- A: eine Gruppe der Formeln COOR², CN, CONR²₂, OR² und/oder R² darstellt, worin R² Wasserstoff, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, NZ₂ substituiert sein können
- R: eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet.

Zu den bevorzugten Phosphonsäuregruppen umfassenden Monomeren gehören unter anderem Alkene, die Phosphonsäuregruppen aufweisen, wie Ethenphosphonsäure, Propenphosphonsäure, Butenphosphonsäure; Acrylsäure- und/oder Methacrylsäure-Verbindungen, die Phosphonsäuregruppen aufweisen, wie beispielsweise 2-Phosphonomethyl-acrylsäure, 2-Phosphonomethyl-methacrylsäure, 2-Phosphonomethyl-acrylsäureamid und 2-Phosphonomethyl-methacrylsäureamid.

Besonders bevorzugt wird handelsübliche Vinylphosphonsäure (Ethenphosphonsäure), wie diese beispielsweise von der Firma Aldrich oder Clariant GmbH erhältlich ist, eingesetzt. Eine bevorzugte Vinylphosphonsäure weist eine Reinheit von mehr als 70%, insbesondere 90 % und besonders bevorzugt mehr als 97% Reinheit auf.

Die Phosphonsäuregruppen umfassenden Monomere können des weiteren auch in Form von Derivaten eingesetzt werden, die anschließend in die Säure überführt werden können, wobei die Überführung zur Säure auch in polymerisiertem Zustand erfolgen kann. Zu diesen Derivaten gehören insbesondere die Salze, die Ester, die Amide und die Halogenide der Phosphonsäuregruppen umfassenden Monomere.

Die Phosphonsäuregruppen umfassenden Monomere können des Weiteren auch nach der Hydrolyse auf und in die Membran eingebracht werden. Dies kann mittels an sich bekannter Maßnahmen (z.B. Sprühen, Tauchen etc.) die aus dem Stand der Technik bekannt sind, erfolgen.

Gemäß einem besonderen Aspekt der vorliegenden Erfindung ist das Verhältnis des Gewichts der Summe aus Phosphorsäure, Polyphosphorsäure und der Hydrolyseprodukte der Polyphosphorsäure zum Gewicht der radikalisch polymerisierbaren Monomere, beispielsweise der Phosphonsäuregruppen umfassenden Monomere, vorzugsweise größer oder gleich 1:2, insbesondere größer oder gleich 1:1. und besonders bevorzugt größer oder gleich 2:1.

Vorzugsweise liegt das Verhältnis des Gewichts der Summe aus Phosphorsäure, Polyphosphorsäure und der Hydrolyseprodukte der Polyphosphorsäure zum Gewicht der radikalisch polymerisierbaren Monomere im Bereich von 1000:1 bis 3:1, insbesondere 100:1 bis 5:1 und besonders bevorzugt 50:1 bis 10:1.

Dieses Verhältnis kann leicht durch übliche Verfahren ermittelt werden, wobei die Phosphorsäure, Polyphosphorsäure und deren Hydrolyseprodukte vielfach aus der Membran ausgewaschen werden können. Hierbei kann das Gewicht der Polyphosphorsäure und deren Hydrolyseprodukte nach der vollständigen Hydrolyse zur Phosphorsäure bezogen werden. Dies gilt im Allgemeinen ebenfalls für die radikalisch polymerisierbaren Monomere.

Sulfonsäuregruppen umfassende Monomere sind in der Fachwelt bekannt. Es handelt sich hierbei um Verbindungen, die mindestens eine Kohlenstoff-Kohlenstoff-Doppelbindung und mindestens eine Sulfonsäuregruppe aufweisen. Vorzugsweise weisen die zwei Kohlenstoffatome, die Kohlenstoff-Kohlenstoff-Doppelbindung bilden, mindestens zwei, vorzugsweise 3 Bindungen zu Gruppen auf, die zu einer geringen sterischen Hinderung der Doppelbindung führen. Zu diesen Gruppen gehören unter anderem Wasserstoffatome und Halogenatome, insbesondere Fluoratome. Im Rahmen der vorliegenden Erfindung ergibt sich das Sulfonsäuregruppen umfassende Polymer aus dem Polymerisationsprodukt, das durch Polymerisation des Sulfonsäuregruppen umfassenden Monomers allein oder mit weiteren Monomeren und/oder Vernetzern erhalten wird.

Das Sulfonsäuregruppen umfassende Monomer kann ein, zwei, drei oder mehr Kohlenstoff-Kohlenstoff-Doppelbindungen umfassen. Des weiteren kann das Sulfonsäuregruppen umfassende Monomer ein, zwei, drei oder mehr Sulfonsäuregruppen enthalten.

Im Allgemeinen enthält das Sulfonsäuregruppen umfassende Monomer 2 bis 20, vorzugsweise 2 bis 10 Kohlenstoffatome.

Bei dem Sulfonsäuregruppen umfassenden Monomer handelt es sich vorzugsweise um Verbindungen der Formel 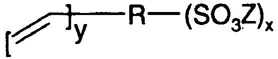 worin
- R: eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
- y: eine ganze Zahl 1, 2, 3, 4, 5, 6, 7, 8, 9 oder 10 bedeutet
und/oder der Formel 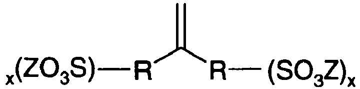 worin
- R: eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
und/oder der Formel 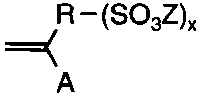 worin
- A: eine Gruppe der Formeln COOR², CN, CONR²₂, OR² und/oder R² darstellt, worin R² Wasserstoff, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, NZ₂ substituiert sein können
- R: eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet.

Zu den bevorzugten Sulfonsäuregruppen umfassenden Monomeren gehören unter anderem Alkene, die Sulfonsäuregruppen aufweisen, wie Ethensulfonsäure, Propensulfonsäure, Butensulfonsäure; Acrylsäure- und/oder Methacrylsäure-Verbindungen, die Sulfonsäuregruppen aufweisen, wie beispielsweise 2-Sulfonomethyl-acrylsäure, 2-Sulfonomethyl-methacrylsäure, 2-Sulfonomethylacrylsäureamid und 2-Sulfonomethyl-methacrylsäureamid.

Besonders bevorzugt wird handelsübliche Vinylsulfonsäure (Ethensulfonsäure), wie diese beispielsweise von der Firma Aldrich oder Clariant GmbH erhältlich ist, eingesetzt. Eine bevorzugte Vinylsulfonsäure weist eine Reinheit von mehr als 70%, insbesondere 90 % und besonders bevorzugt mehr als 97% Reinheit auf.

Die Sulfonsäuregruppen umfassenden Monomere können des Weiteren auch in Form von Derivaten eingesetzt werden, die anschließend in die Säure überführt werden können, wobei die Überführung zur Säure auch in polymerisiertem Zustand erfolgen kann. Zu diesen Derivaten gehören insbesondere die Salze, die Ester, die Amide und die Halogenide der Sulfonsäuregruppen umfassenden Monomere.

Die Sulfonsäuregruppen umfassenden Monomere können des weiteren auch nach der Hydrolyse auf und in die Membran eingebracht werden. Dies kann mittels an sich bekannter Maßnahmen (z.B. Sprühen, Tauchen etc.) die aus dem Stand der Technik bekannt sind, erfolgen.

In einer weiteren Ausführungsform der Erfindung können zur Vernetzung befähigte Monomere eingesetzt werden. Diese Monomere können der Hydrolyseflüssigkeit beigefügt werden. Darüber hinaus können die zur Vernetzung befähigten Monomere auch auf die nach der Hydrolyse erhaltene Membran aufgebracht werden.

Bei den zur Vernetzung befähigten Monomeren handelt es sich insbesondere um Verbindungen, die mindestens 2 Kohlenstoff-Kohlenstoff Doppelbindungen aufweisen. Bevorzugt werden Diene, Triene, Tetraene, Dimethylacrylate, Trimethylacrylate, Tetramethylacrylate, Diacrylate, Triacrylate, Tetraacrylate.

Besonders bevorzugt sind Diene, Triene, Tetraene der Formel

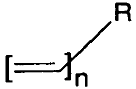

Dimethylacrylate, Trimethylycrylate, Tetramethylacrylate der Formel

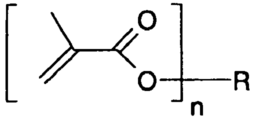

Diacrylate, Triacrylate, Tetraacrylate der Formel 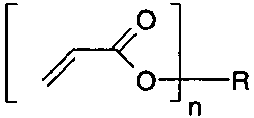 worin
- R: eine C1-C15-Alkylgtuppe, C5-C20-Aryl oder Heteroarylgruppe, NR', -SO₂, PR', Si(R')₂ bedeutet, wobei die vorstehenden Reste ihrerseits substituiert sein können,
- R': unabhängig voneinander Wasserstoff, eine C1-C15-Alkylgruppe, C1-C15-Alkoxygruppe, C5-C20-Aryl oder Heteroarylgruppe bedeutet und
- n: mindestens 2 ist.

Bei den Substituenten des vorstehenden Restes R handelt es sich vorzugsweise um Halogen, Hydroxyl, Carboxy, Carboxyl, Carboxylester, Nitrile, Amine, Silyl, Siloxan Reste.

Besonders bevorzugte Vernetzer sind Allylmethacrylat, Ethylenglykoldimethacrylat, Diethylenglykoldimethacrylat, Triethylenglykoldimethacrylat, Tetra- und Polyethylenglykoldimethacrylat, 1,3-Butandioldimethacrylat, Glycerindimethacrylat, Diurethandimethacrylat, Trimethylpropantrimethacrylat, Epoxyacrylate, beispielsweise Ebacryl, N',N-Methylenbisacrylamid, Carbinol, Butadien, Isopren, Chloropren, Divinylbenzol und/oder Bisphenol-A-dimethylacrylat. Diese Verbindungen sind beispielsweise von Sartomer Company Exton, Pennsylvania unter den Bezeichnungen CN-120, CN104 und CN-980 kommerziell erhältlich.

Der Einsatz von Vernetzern ist optional, wobei diese Verbindungen üblich im Bereich zwischen 0,05 bis 30 Gew.-%, vorzugsweise 0,1 bis 20 Gew.%, besonders bevorzugt 1 und 10 Gew.-%, bezogen auf das Gewicht der Membran, eingesetzt werden können.

Die vernetzenden Monomere können auch durch Sprühen etc. aufgebracht werden.

Gemäß einem besonderen Aspekt der vorliegenden Erfindung können die Phosphonsäure- und/oder Sulfonsäuregruppen umfassenden Monomere bzw. die vernetzenden Monomere polymerisiert werden, wobei die Polymerisation vorzugsweise radikalisch erfolgt. Die Radikalbildung kann thermisch, photochemisch, chemisch und/oder elektrochemisch erfolgen.

Beispielsweise kann eine Starterlösung, die mindestens eine zur Bildung von Radikalen befähigte Substanz enthält, der Hydrolyseflüssigkeit beigefügt werden. Des Weiteren eine Starterlösung auf die Membran nach der Hydrolyse aufgebracht werden. Dies kann mittels an sich bekannter Maßnahmen (z.B. Sprühen, Tauchen etc.) die aus dem Stand der Technik bekannt sind, erfolgen.

Geeignete Radikalbildner sind unter anderem Azoverbindungen, Peroxyverbindungen, Persulfatverbindungen oder Azoamidine. Nicht limitierende Beispiele sind Dibenzoylperoxid, Dicumolperoxid, Cumolhydroperoxid, Diisopropylperoxidicarbonat, Bis(4-t-butylcyclohexyl)peroxidicarbonat, Dikaliumpersulfat, Ammoniumperoxidisulfat, 2,2'-Azobis(2-methylpropionitril) (AIBN), 2,2'-Azobis-(isobuttersäureamidin)hydrochlorid, Benzpinakol, Dibenzylderivate, Methylethylenketonperoxid, 1,1-Azobiscyclohexancarbonitril, Methylethylketonperoxid, Acetylacetonperoxid, Dilaurylperoxid, Didecanoylperoxid, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, tert.-Butylperoxyisobutyrat, tert.-Butylperoxyacetat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, sowie die von der Firma DuPont unter dem Namen ®Vazo, beispielsweise ®Vazo V50 und ®Vazo WS erhältlichen Radikalbildner.

Des Weiteren können auch Radikalbildner eingesetzt werden, die bei Bestrahlung Radikale bilden. Zu den bevorzugten Verbindungen gehören unter anderem α,α-Diethoxyacetophenon (DEAP, Upjon Corp), n-Butylbenzoinether (®Trigonal-14, AKZO) und 2,2-Dimethoxy-2-phenylacetophenon (®Igacure 651) und 1-Benzoylcyclohexanol (®Igacure 184), Bis(2,4,6-trimethylbenzoyl)-phenylphosphinoxid (®Irgacure 819) und 1-[4-(2-Hydroxyethoxy)phenyl]-2-hydroxy-2-phenylpropan-1-on (®Irgacure 2959), die jeweils von der Fa. Ciba Geigy Corp. kommerziell erhältlich sind.

Üblicherweise werden zwischen 0,0001 und 5 Gew.%, insbesondere 0,01 bis 3 Gew.-% (bezogen auf das Gewicht der radikalisch polymerisierbaren Monomere; Phosphonsäure- und/oder Sulfonsäuregruppen umfassenden Monomere bzw. der vernetzenden Monomere) an Radikalbildner zugesetzt. Die Menge an Radikalbildner kann je nach gewünschten Polymerisationsgrad variiert werden.

Die Polymerisation kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen.

Die Polymerisation kann auch durch Einwirken von UV-Licht mit einer Wellenlänge von weniger als 400 nm erfolgen. Diese Polymerisationsmethode ist an sich bekannt und beispielsweise in Hans Joerg Elias, Makromolekulare Chemie, 5.Auflage, Band 1, s.492-511; D. R. Arnold, N. C. Baird, J. R. Bolton, J. C. D. Brand, P. W. M Jacobs, P.de Mayo, W. R. Ware, Photochemistry-An Introduction, Academic Press , New York und M.K.Mishra, Radical Photopolymerization of Vinyl Monomers, J. Macromol. Sci.-Revs. Macromol. Chem. Phys. C22(1982-1983) 409 beschrieben.

Die Polymerisation kann auch durch Einwirken von β-,γ- und/oder Elektronen Strahlen erzielt werden. Gemäß einer besonderen Ausführungsform der vorliegenden Erfindung wird eine Membran mit einer Strahlungsdosis im Bereich von 1 bis 300 kGy, bevorzugt von 3 bis 200 kGy und ganz besonders bevorzugt von 20 bis 100 kGy bestrahlt.

Die Polymerisation der Phosphonsäure- und/oder Sulfonsäuregruppen umfassenden Monomere bzw. der vernetzenden Monomere erfolgt vorzugsweise bei Temperaturen oberhalb Raumtemperatur (20°C) und kleiner 200°C, insbesondere bei Temperaturen zwischen 40°C und 150°C, besonders bevorzugt zwischen 50°C und 120°C. Die Polymerisation erfolgt vorzugsweise unter Normaldruck, kann aber auch unter Einwirkung von Druck erfolgen. Die Polymerisation führt zu einer Verfestigung des flächigen Gebildes, wobei diese Verfestigung durch Mikrohärtemessung verfolgt werden kann. Vorzugsweise beträgt die durch die Polymerisation bedingte Zunahme der Härte mindestens 20%, bezogen auf die Härte des in Schritt B) erhaltenen flächigen Gebildes.

Gemäß einem besonderen Aspekt der vorliegenden Erfindung ist das molare Verhältnis der molaren Summe aus Phosphorsäure, Polyphosphorsäure und der Hydrolyseprodukte der Polyphosphorsäure zur Anzahl der Mole der Phosphonsäuregruppen und/oder Sulfonsäuregruppen in den durch Polymerisation von Phosphonsäuregruppen umfassenden Monomere und/oder Sulfonsäuregruppen umfassenden Monomere erhältlichen Polymere, vorzugsweise größer oder gleich 1:2, insbesondere größer oder gleich 1:1. und besonders bevorzugt größer oder gleich 2:1.

Vorzugsweise liegt das molare Verhältnis der molaren Summe aus Phosphorsäure, Polyphosphorsäure und der Hydrolyseprodukte der Polyphosphorsäure zur Anzahl der Mole der Phosphonsäuregruppen und/oder Sulfonsäuregruppen in den durch Polymerisation von Phosphonsäuregruppen umfassenden Monomere und/oder Sulfonsäuregruppen umfassenden Monomere erhältlichen Polymere im Bereich von 1000:1 bis 3:1, insbesondere 100:1 bis 5:1 und besonders bevorzugt 50:1 bis 10:1.

Das Molverhältnis kann mit üblichen Methoden bestimmt werden. Hierzu können insbesondere spektroskopiesche Verfahren, beispielsweise die NMR-Spektroskopie eingesetzt werden. Hierbei ist zu bedenken, dass die Phosphonsäuregruppen in der formalen Oxidationsstufe 3 und der Phosphor in Phosphorsäure, Polyphosphorsäure bzw. Hydrolyseprodukte hiervon in der Oxidationsstufe 5 vorliegen.

Je nach gewünschten Polymerisationsgrad ist das flächige Gebilde, welches nach der Polymerisation erhalten wird, eine selbsttragende Membran. Bevorzugt beträgt der Polymerisationsgrad mindestens 2, insbesondere mindestens 5, besonders bevorzugt mindestens 30 Wiederholeinheiten, insbesondere mindestens 50 Wiederholeinheiten, ganz besonders bevorzugt mindestens 100 Wiederholeinheiten. Dieser Polymerisationsgrad bestimmt sich über das Zahlenmittel des Molekulargewichts Mₙ, das durch GPC-Methoden ermittelt werden kann. Aufgrund der Probleme die in der Membran enthaltenen Phosphonsäuregruppen umfassenden Polymere ohne Abbau zu isolieren, wird dieser Wert anhand einer Probe bestimmt, die durch Polymerisation von Phosphonsäuregruppen umfassenden Monomeren ohne Zusatz von Polymer durchgeführt wird. Hierbei wird der Gewichtsanteil an Phosphonsäuregruppen umfassenden Monomeren und an Radikalstarter im Vergleich zu den Verhältnissen der Herstellung der Membran konstant gehalten. Der Umsatz, der bei einer Vergleichspolymerisation erzielt wird, ist vorzugsweise größer oder gleich 20%, insbesondere größer oder gleich 40% und besonders bevorzugt größer oder gleich 75%, bezogen auf die eingesetzten Phosphonsäuregruppen umfassenden Monomere.

Die Hydrolyseflüssigkeit umfasst Wasser, wobei die Konzentration des Wassers im Allgemeinen nicht besonders kritisch ist. Gemäß einem besonderen Aspekt der vorliegenden Erfindung umfasst die Hydrolyseflüssigkeit 5 bis 80 Gew.-%, vorzugsweise 8 bis 70 Gew.-% und besonders bevorzugt 10 bis 50 Gew.-% Wasser. Die Wassermenge, die in den Sauerstoffsäuren formal enthalten ist, wird bei dem Wassergehalt der Hydrolyseflüssigkeit nicht berücksichtigt.

Von den zuvor genannten Säuren sind Phosphorsäure und/oder Schwefelsäure besonders bevorzugt, wobei diese Säuren insbesondere 5 bis 70 Gew.-%, vorzugsweise 10 bis 60 Gew.-% und besonders bevorzugt 15 bis 50 Gew.-% Wasser umfassen.

Im Anschluss an die Feuchtigkeitsbehandlung kann die Membran durch Einwirken von Hitze in Gegenwart von Sauerstoff noch vernetzt werden. Diese Härtung der Membran verbessert die Eigenschaften der Membran zusätzlich. Hierzu kann die Membran auf eine Temperatur von mindestens 150°C, vorzugsweise mindestens 200°C und besonders bevorzugt mindestens 250°C erwärmt werden. Die Sauerstoffkonzentration liegt bei diesem Verfahrensschritt üblich im Bereich von 5 bis 50 Vol.-%, vorzugsweise 10 bis 40 Vol.-%, ohne dass hierdurch eine Beschränkung erfolgen soll. Auch diese Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit β-Strahlen. Die Strahlungsdosis beträgt hierbei zwischen 5 und 200 kGy.

Je nach gewünschtem Vernetzungsgrad kann die Dauer der Vernetzungsreaktion in einem weiten Bereich liegen. Im Allgemeinen liegt diese Reaktionszeit im Bereich von 1 Sekunde bis 10 Stunden, vorzugsweise 1 Minute bis 1 Stunde, ohne dass hierdurch eine Beschränkung erfolgen soll.

Das erfindungsgemäße Verfahren erlaubt eine vergleichsweise einfache und kostengünstige Herstellung von Säure-dotierten, Polyazol-enthaltenden Membranen, welches leicht großtechnisch umgesetzt werden kann. Dabei können durch die erfindungsgemäße Vorgehensweise insbesondere die folgenden Vorteile erreicht werden:
⇒ zur Herstellung der Membranen wird deutlich weniger, meist kein Lösungsmittel benötigt,
⇒ die Herstellung der Membranen kann mit einer deutlich besseren Raum-Zeit-Ausbeute erfolgen,
⇒ es werden Membranen mit vergleichsweise hoher Qualität und Reproduzierbarkeit erhalten, Qualitätsschwankungen zwischen unterschiedlichen Chargen werden so gut wie gar nicht beobachtet,
⇒ die Verarbeitung von Polyazolen mit vergleichsweise hohen Molekulargewichten ist nun möglich und
⇒ die Ausbildung von Blasen in der Membran wird nahezu vollständig verhindert.

Anwendungsgebiete der durch das erfindungsgemäße Verfahren erhältlichen Membranen umfassen insbesondere ihre Verwendung als Polymer-Elektrolyt-Membran in Brennstoffzellen. Für weitere Details wird auf die Druckschriften DE 102 13 540 A1, DE 102 46 559 A1 und DE 102 46 461 A1 verwiesen).

## Patentansprüche

1. Verfahren zur Herstellung einer protonenleitenden, Polyazol-enthaltenden Membran, bei welchem man
A) eine Zusammensetzung die, jeweils bezogen auf ihr Gesamtgewicht, 95,0 Gew.-% bis 99,5 Gew.-% Polyphosphorsäure und 0,5 Gew.-% bis 5,0 Gew.-% Polyazol enthält,
B) bei einer Temperatur im Bereich von 120°C bis 300°C durch eine Schlitzöffnung extrudiert,
C) die Zusammensetzung die Polyphosphorsäure und Polyazol enthält eine Lösungsviskosität im Bereich von 10 Pas bis 1000 Pas aufweist, gemessen nach DIN 53018 bei der Temperatur an der Schlitzöffnung während der Herstellung der Membran, und
D) die Zusammensetzung anschließend durch Abkühlung und/oder Hydrolyse und/oder Vernetzung verfestigt.

2. Verfahren nach Anspruch 1, **dadurch gekennzeichnet, dass** man die Zusammensetzung bei einer Temperatur im Bereich von 120°C bis 180°C durch die Öffnung extrudiert.

3. Verfahren nach Anspruch 1 oder 2, **dadurch gekennzeichnet, dass** man Zusammensetzung einsetzt, die eine Lösungsviskosität im Bereich von 20 Pas bis 800 Pas aufweist, gemessen nach DIN 53018 bei der Temperatur an der Öffnung während der Herstellung der Membran.

4. Verfahren nach mindestens einem der vorangehenden Ansprüche, **dadurch gekennzeichnet, dass** man eine Zusammensetzung einsetzt, die mindestens ein Polyazol mit einer Grenzviskosität, gemessen in mindestens 96 Gew.-%-iger Schwefelsäure, im Bereich von 0,3 bis 10 enthält.

5. Verfahren nach Anspruch 4, **dadurch gekennzeichnet, dass** die Schlitzöffnung eine Spaltbreite im Bereich von 20 cm bis 50 cm aufweist.

6. Verfahren nach Anspruch 4 oder 5, **dadurch gekennzeichnet, dass** die Schlitzöffnung eine Spaltlänge im Bereich von 800 µm bis 1600 µm aufweist.

7. Verfahren nach Anspruch 4, 5 oder 6, **dadurch gekennzeichnet, dass** die Schlitzöffnung ein Verhältnis von Spaltbreite zu Spaltlänge im Bereich von 100:1 bis 1000:1 aufweist.

8. Verfahren nach mindestens einem der vorangehenden Ansprüche, **dadurch gekennzeichnet, dass** man die Zusammensetzung mit einem Druck von mindestens 0,1 bar durch die Öffnung presst,

9. Verfahren nach Anspruch 1, **dadurch gekennzeichnet, dass** man die Polyphosphorsäure und das Polyazol im Extruder mischt.

10. Verfahren nach mindestens einem der vorangehenden Ansprüche, **dadurch gekennzeichnet, dass** man das Polyazol
a) durch Umsetzung von einem oder mehreren aromatischen und/oder heteroaromatischen Tetra-Amino-Verbindungen mit einer oder mehreren aromatischen und/oder heteroaromatischen Carbonsäuren oder deren Derivate, die mindestens zwei Säuregruppen pro Carbonsäure-Monomer enthalten, oder
b) durch Umsetzung von einer oder mehreren aromatischen und/oder heteroaromatischen Diaminocarbonsäuren
in situ herstellt.

11. Verfahren nach mindestens einem der vorangehenden Ansprüche, **dadurch gekennzeichnet, dass** das Polyazol mindestens eine Phosphonsäuregruppe umfasst.

12. Verfahren nach mindestens einem der vorangehenden Ansprüche, **dadurch gekennzeichnet, dass** man die Zusammensetzung auf einem Träger aufträgt.

13. Verfahren nach Anspruch 12, **dadurch gekennzeichnet, dass** man mehrere Felder der Zusammensetzung auf dem Träger aufträgt, die nicht untereinander verbunden sind.

14. Verfahren nach mindestens einem der vorangehenden Ansprüche, **dadurch gekennzeichnet, dass** man die Zusammensetzung verfestigt, indem man sie mit Feuchtigkeit behandelt.

15. Verfahren nach mindestens einem der vorangehenden Ansprüche, **dadurch gekennzeichnet, dass** man eine Zusammensetzung einsetzt, die mindestens ein von Polyazol verschiedenes Polymer enthält.

## Claims

1. A method for producing a proton-conducting, polyazole-containing membrane, in which
A) a composition which, in each case relative to the total weight thereof, contains 95.0 wt.% to 99.5 wt.% of polyphosphoric acid and 0.5 wt.% to 5.0 wt.% of polyazole
B) is extruded through the slot opening at a temperature in the range from 120°C to 300°C,
C) the composition containing polyphosphoric acid and polyazole exhibitis a solution viscosity in the range from 10 Pa·s to 1000 Pa·s, measured to DIN 53018 at the temperature at the slot opening during production of the membrane, and
D) the composition is then solidified by means of cooling-down and/or hydrolysis and/or cross-linking.

2. The method according to Claim 1, **characterized in that** the composition is extruded through the opening at a temperature in the range from 120°C to 180°C.

3. The method according to Claim 1 or 2, **characterized in that** a composition is used which exhibits a solution viscosity in the range from 20 Pa·s to 800 Pa·s, measured to DIN 53018 at the temperature at the opening during production of the membrane.

4. The method according to at least one of the preceding claims, **characterized in that** a composition is used which contains at least one polyazole with an intrinsic viscosity, measured in at least 96 wt.% sulfuric acid, in the range from 0.3 to 10.

5. The method according to Claim 4, **characterized in that** the slot opening has a gap width in the range from 20 cm to 50 cm.

6. The method according to Claim 4 or 5, **characterized in that** the slot opening has a gap length in the range from 800 µm to 1600 µm.

7. The method according to Claim 4, 5 or 6, **characterized in that** the slot opening has a ratio of gap width to gap length in the range from 100:1 to 1000:1.

8. The method according to at least one of the preceding claims, **characterized in that** the composition is pressed through the opening with a pressure of at least 0.1 bar.

9. The method according to Claim 1, **characterized in that** the polyphosphoric acid and the polyazole are mixed in the extruder.

10. The method according to at least one of the preceding claims, **characterized in that** the polyazole is produced in situ
a) by reacting one or more aromatic and/or heteroaromatic tetra-amino compounds with one or more aromatic and/or heteroaromatic carboxylic acids or the derivatives thereof, which contain at least two acid groups per carboxylic acid monomer, or
b) by reacting one or more aromatic and/or heteroaromatic diaminocarboxylic acids.

11. The method according to at least one of the preceding claims, **characterized in that** the polyazole comprises at least one phosphonic acid group.

12. The method according to at least one of the preceding claims, **characterized in that** the composition is applied onto a support.

13. The method according to Claim 12, **characterized in that** a plurality of non-interconnected fields of the composition are applied onto the support.

14. The method according to at least one of the preceding claims, **characterized in that** the composition is solidified by treating it with moisture.

15. The method according to at least one of the preceding claims, **characterized in that** a composition is used which contains at least one polymer which differs from polyazole.

## Revendications

1. Procédé de fabrication d'une membrane conductrice de protons contenant du polyazole au cours duquel on
a) Extrude une composition qui, selon son poids total, contient de 95,0 à 99,5 %m d'acide polyphosphorique et 0,5 à 5,0 %m de polyazole,
b) à une température de 120 °C à 300 °C à travers une ouverture en fente,
c) la composition d'acide polyphosphorique et de polyazole présente une viscosité en solution de 10 à 1000 Pas, mesuré selon DIN 53018 à la température de l'ouverture en fente au moment de la production de la membrane, et
d) la composition est finalement solidifiée par refroidissement, hydrolyse ou réticulation.

2. Procédé selon la revendication 1, **caractérisé en ce qu'**on extrude la composition à une température située entre 120 °C et 180 °C à travers l'ouverture.

3. Procédé selon les revendications 1 ou 2, **caractérisé en ce qu'**on ajoute la composition qui présente une viscosité en solution de 20 à 800 Pas, mesurée selon DIN 53018 à la température de l'ouverture au moment de la production de la membrane.

4. Procédé selon au moins l'une des revendications précédentes, **caractérisé en ce qu'**on ajoute la composition qui contient au moins un polyazole d'une viscosité maximale de 0,3 à 10, mesurée dans de l'acide sulfurique d'au moins 96 %m.

5. Procédé selon la revendication 4, **caractérisé en ce que** l'ouverture en fente présente une largeur de fente de 20 à 5 cm.

6. Procédé selon la revendication 5, **caractérisé en ce que** l'ouverture en fente présente une longueur de fente de 800 à 1600 µm.

7. Procédé selon les revendications 4, 5 ou 6, **caractérisé en ce que** l'ouverture en fente présente un rapport de largeur pour longueur de fente de 100 :1 à 1000 :1.

8. Procédé selon au moins l'une des revendications précédentes, **caractérisé en ce qu'**on pousse la composition à travers l'ouverture à l'aide d'une pression d'au moins 0,1 bar.

9. Procédé selon la revendication 1, **caractérisé en ce qu'**on mélange l'acide polyphosphorique et le polyazole dans l'extrudeuse.

10. Procédé selon au moins l'une des revendications précédentes, **caractérisé en ce qu'**on produit le polyazole in situ
a) en substituant un ou plusieurs composés de tétra-amines aromatiques et/ou hétéroaromatiques par un ou plusieurs acides carboxyliques aromatiques ou hétéroaromatiques ou dérivé de ces derniers contenant au moins deux groupes d'acide par monomère d'acide carboxylique, ou
b) en substituant un ou plusieurs acides diaminocarboxyliques aromatiques ou hétéroaromatiques.

11. Procédé selon au moins l'une des revendications précédentes, **caractérisé en ce que** le polyazole comprend au moins un groupe d'acide phosphonique.

12. Procédé selon au moins l'une des revendications précédentes, **caractérisé en ce qu'**on étale la composition sur un support.

13. Procédé selon la revendication 12, **caractérisé en ce qu'**on étale sur le support plusieurs champs de la composition qui ne sont pas reliés entre eux.

14. Procédé selon au moins l'une des revendications précédentes, **caractérisé en ce qu'**on solidifie la composition en lui faisant subir un traitement humide.

15. Procédé selon au moins l'une des revendications précédentes, **caractérisé en ce qu'**on ajoute une composition qui contient au moins un polymère qui se différencie du polyazole.
